(19) Europäisches Patentamt
European Patent Office
Office européen des brevets

(11) Veröffentlichungsnummer: **0 263 074 B1**

(12) **EUROPÄISCHE PATENTSCHRIFT**

(45) Veröffentlichungstag der Patentschrift: **02.03.94**

(51) Int. Cl.[5]: **C09B 67/22**, C09B 63/00, C08K 5/23

(21) Anmeldenummer: **87810563.4**

(22) Anmeldetag: **28.09.87**

Die Akte enthält technische Angaben, die nach dem Eingang der Anmeldung eingereicht wurden und die nicht in dieser Patentschrift enthalten sind.

(54) **Mischkristalle aus verlackten Azofarbstoffen.**

(30) Priorität: **03.10.86 CH 3961/86**

(43) Veröffentlichungstag der Anmeldung: **06.04.88 Patentblatt 88/14**

(45) Bekanntmachung des Hinweises auf die Patenterteilung: **02.03.94 Patentblatt 94/09**

(84) Benannte Vertragsstaaten: **CH DE FR GB IT LI NL**

(56) Entgegenhaltungen:
**EP-A- 0 073 972**
**EP-A- 0 126 405**
**AU-B- 416 323**
**DE-A- 2 616 981**

(73) Patentinhaber: **CIBA-GEIGY AG**
**Klybeckstrasse 141**
**CH-4002 Basel(CH)**

(72) Erfinder: **Hari, Stefan, Dr.**
**Ch. de la Redoute 7**
**CH-1752 Villars-sur-Glâne(CH)**
Erfinder: **Grubenmann, Arnold, Dr.**
**Chemin des Cossettes 1**
**CH-1723 Marly(CH)**
Erfinder: **Burkhard, Andreas, Dr.**
**Blotzheimerstrasse 29**
**CH-4055 Basel(CH)**

**EP 0 263 074 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mischkristalle aus verlackten Azofarbstoffen der Pyrazolonreihe, Verfahren zu deren Herstellung und ihre Verwendung zum Färben von hochmolekularem organischem Material.

Metall- und Aminsalze von Azoverbindungen der Pyrazolonreihe sind bekannt. So werden beispielsweise in den DE-OS 26 16 981 und DE-OS 33 18 073 Metallsalze und in der EP-A 73 972 Ammoniumsalze von sulfosäuregruppenhaltigen Azofarbstoffen der Pyrazolonreihe beschrieben. Derartige Verbindungen werden als Pigmente zum Färben von Kunststoffen eingesetzt.

Es wurde nun gefunden, dass Mischkristalle aus verlackten Azofarbstoffen der Pyrazolonreihe Pigmente darstellen, die dank ihrer guten Textur sich durch gute Dispergierbarkeit auszeichnen und ferner gute Hitze-, Licht- und Wetterbeständigkeit und insbesondere überraschend hohe Farbstärke, Deckkraft und reinen Farbton zeigen.

Gegenstand der vorliegenden Erfindung sind demnach Mischkristalle aus mindestens zwei voneinander verschiedenen Verbindungen der Formel I

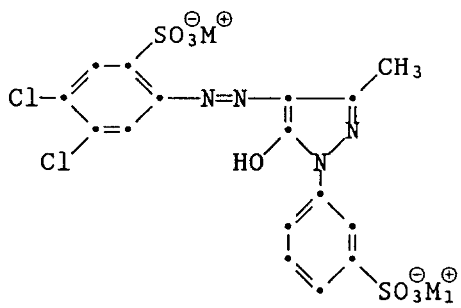

(I),

worin $M^{\oplus}$ und $M_1^{\oplus}$ unabhängig voneinander $K^{\oplus}$, $NH_4^{\oplus}$ und insbesondere $Na^{\oplus}$ oder $(Ca/2)^{\oplus}$ bedeuten, dadurch gekennzeichnet, dass in den die Mischkristalle bildenden Verbindungen der Formel I mindestens zwei der Kationen $M^{\oplus}$ und $M_1^{\oplus}$ voneinander verschieden sind und dass sich die Röntgenbeugungsdiagramme der Mischkristalle von den Röntgenbeugungsdiagrammen der Einzelkomponenten und von deren Summe unterscheiden.

Die Herstellung der erfindungsgemässen Mischkristalle erfolgt z.B. (a) durch Rekristallisation eines beispielsweise durch Diazotierung eines Amins der Formel II

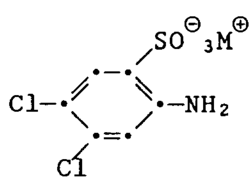

(II)

mit der wässrigen Lösung eines Nitrits der Formel

$M_1^{\oplus}NO_2^{\ominus}$

und Umsetzung der erhaltenen Diazoverbindung mit einer Kupplungskomponente der Formel III

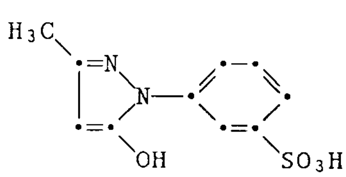

(III)

in einer wässrig sauren Lösungsmittelmischung erhaltenen Rohpigments, wobei $M^{\oplus}$ und $M_1^{\oplus}$ die oben angegebene Bedeutung haben.

Man kann (b) auch eine Disulfonsäure der Formel IV

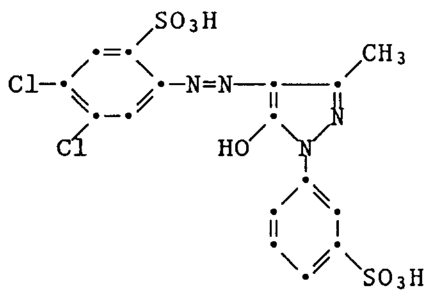

(IV),

mit einer Mischung aus einem M- und einem $M_1$-Salz in Wasser umsetzen und das so erhaltene Produkt anschliessend mindestens 2 Stunden zwischen 60 und 100 °C einer für Pigmente an sich bekannten Nachbehandlung unterwerfen.

Beispiele für M- und $M_1$-Salze sind: Nitrate, Nitrite, Sulfate, Alkalihydroxide und bevorzugt Chloride und insbesondere Acetate der obenerwähnten Kationen $M^{\oplus}$ bzw. $M_1^{\oplus}$.

Die Disulfonsäure der Formel IV ist eine bekannte Verbindung.

Eine weitere Variante (c) zur Herstellung von bevorzugten erfindungsgemässen Mischkristallen besteht darin, eine in Wasser suspendierte Komponente der Formel I mit einem M-Salz mit unterschiedlichem $M^{\oplus}$ z.B. im Molverhältnis 1:2, bei Temperaturen zwischen 60 und 100 °C, bevorzugt zwischen 75 und 85 °C, und unter ständigem Rühren, umzusetzen.

Eine Variante (d) zur Herstellung der erfindungsgemässen Mischkristalle aus zwei voneinander verschiedenen Verbindungen der Formel I, worin $M^{\oplus}$ und $M_1^{\oplus}$ gleich sind, besteht darin, die zwei Einzelkomponenten der Formel I, die sich durch ihre Kationen $M^{\oplus}$ unterscheiden, gemeinsam nach für Pigmente an sich bekannten Methoden zu rekristallisieren.

Einzelkomponenten der Formel I, worin $M^{\oplus}$ und $M_1^{\oplus}$ gleich sind sind bekannt und können z.B. wie in der DE-OS 26 16 981 beschrieben hergestellt werden.

Mischkristalle werden durch ihr Röntgenbeugungsdiagramm gekennzeichnet, welches sich sowohl von demjenigen der Einzelkomponenten des Mischkristalls als auch von demjenigen ihres physikalischen Gemisches unterscheidet.

Das Röntgenbeugungsdiagramm der erfindungsgemässen Mischkristalle ist durch andere Linien gekennzeichnet als diejenigen, welche die Röntgenbeugungsdiagramme des entsprechenden physikalischen Gemischs und der entsprechenden Einzelkomponenten charakterisieren.

Die Rekristallisation bzw. thermische Behandlung geschieht nach für Pigmente üblichen Methoden. Im allgemeinen handelt es sich um eine thermische Nachbehandlung in Wasser oder in einem organischen Lösungsmittel, gegebenenfalls unter Druck. Vorzugsweise verwendet man organische Lösungsmittel, z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole oder Pentanole, Ether, wie Ethylenglykolmonomethyl- oder -monoethylether, Amide, wie Dimethylformamid oder N-Methylpyrrolidon, sowie Dimethylsulfoxid oder Sulfolan. Man kann die Nachbehandlung auch in Wasser, gegebenenfalls unter Druck, in Gegenwart von organischen Lösungsmitteln und/oder mit Zusatz von oberflächenaktiven Substanzen durchführen.

Die erfindungsgemässen Mischkristalle können als Pigmente zum Färben von hochmolekularem organischem Material verwendet werden.

Hochmolekulare organische Materialien, die mit den erfindungsgemässen Mischkristallen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Mischkristalle zum Einfärben von Polyvinylchlorid und Polyolefinen, wie Polyethylen und Polypropylen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Mischkristalle als Toner oder in Form von Präparaten einzusetzen.

Bezogen auf das zu pigmentierende hochmolekulare organische Material kann man die erfindungsgemässen Mischkristalle in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen Mischkristallen erfolgt beispielsweise derart, dass man solche Mischkristalle gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Mischkristalle in die Polymeren eingearbeitet werden. Zwecks Erzielung verschiedener Farbtöne ist es ferner möglich, den hochmolekularen organischen Stoffen neben den erfindungsgemässen Mischkristallen noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Mischkristalle gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, zeichnen sich die erfindungsgemässen Mischkristalle durch gute allgemeine Pigmenteigenschaften, wie gute Dispergierbarkeit, hohe Farbstärke und Reinheit, gute Migrations-, Hitze-, Licht- und Wetterbeständigkeit sowie gute Deckkraft aus.

Die nachfolgenden Beispiele erläutern die Erfindung. Darin bedeuten Teile Gewichtsteile, sofern nichts anderes angegeben ist.

Beispiel 1: 2,6 Teile 2-Amino-4,5-dichlor-benzolsulfonsäure-Calciumsalz und 2,7 Teile 1-(3-Sulfophenyl)-3-methyl-5-pyrazolon werden in der Mischung aus 55 Volumenteilen Dimethylformamid, 55 Teilen dest. Wasser und 55 Volumenteilen Essigsäure bei 30°C gelöst. Die orange Lösung wird bei 26°C in 10 Minuten tropfenweise mit 2,55 Volumenteilen 4N-Natriumnitritlösung versetzt. Es fällt ein oranger Niederschlag aus, die Temperatur steigt auf 28°C. Nach 5 Stunden Rühren sinkt die Temperatur auf 23°C. Die orange Suspension wird abgenutscht. Der Rückstand wird gut abgepresst, mit 100 Teilen entionisiertem Wasser gewaschen und im Vakuum bei 60°C getrocknet. Man erhält 4,5 Teile eines orangen Pulvers, das anschliessend in 100 Volumenteilen sec.-Butylalkohol-Wasser (1:1) während 2 Stunden rekristallisiert wird. Das so erhaltene intensiv-orange Pulver entspricht der Summenformel

$$C_{16}H_{10}Cl_2N_4O_7S_2NaCa/2 \cdot H_2O$$

| | | | | | | | |
|---|---|---|---|---|---|---|---|
| Analyse, Ber. (in %): | C 33,93 | H 2,20 | Cl 12,50 | N 9,89 | S 11,32 | Ca 3,54 | Na 4,06 |
| Gef. (in %): | C 34,03 | H 2,21 | Cl 12,51 | N 9,90 | S 11,27 | Ca 3,91 | Na 4,10 |

Das Röntgenbeugungsdiagramm dieses Mischkristalls unterscheidet sich sowohl von demjenigen der Einzelkomponenten des Mischkristalls als auch von demjenigen ihres physikalischen Gemisches.

Zur Bestimmung der Netzebenenabstände (d-Werte) wird das Beugungsbild auf Film registriert. Die Aufnahme erfolgt in Transmission mit einer Guinier-Kamera (®Enraf-Nonius Guinier-de Wolff - Kamera Nr. II) mit Cu-K-alpha-Strahlung (Wellenlänge = 1,54178 Å). In der nachfolgenden Tabelle sind die d-Werte der stärksten Linien (d > 3,0 Å) angegeben, zusammen mit den von Auge geschätzten relativen Linienintensitäten.

| d-Wert in Å | Intensität |
|---|---|
| 10,5 | sehr stark |
| 9,8 | sehr schwach |
| 8,8 | schwach |
| 8,1 | mittel |
| 7,9 | schwach |
| 5,87 | mittel |
| 5,47 | stark |
| 5,19 | mittel |
| 4,86 | schwach |
| 4,72 | sehr stark |
| 4,59 | stark |
| 4,44 | sehr schwach |
| 4,39 | schwach |
| 4,25 | sehr stark |
| 4,16 | sehr stark |
| 4,08 | mittel |
| 3,95 | schwach |
| 3,88 | schwach |
| 3,83 | stark |
| 3,65 | mittel |
| 3,48 | sehr stark |
| 3,45 | sehr stark |
| 3,36 | stark |
| 3,32 | mittel |
| 3,07 | sehr stark |
| 3,04 | stark |

Beispiel 2: 6,1 Teile der Azoverbindung der Formel VII

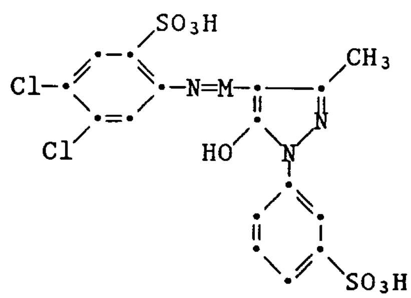

(VII),

werden in 80 Teilen entionisiertem Wasser bei 70 °C gelöst. Es entsteht eine dunkelorange Lösung. Diese wird innerhalb von 5 Minuten mit der Lösung von 0,8 Teilen Calciumacetat und 0,8 Teilen Natriumacetat in 20 Teilen destilliertem Wasser versetzt. Die erhaltene orange Suspension wird 2 Stunden bei 70 °C gerührt, auf Raumtemperatur abkühlen gelassen und filtriert. Der Rückstand wird mit 100 Teilen entionisiertem Wasser gewaschen und im Vakuum bei 60 °C getrocknet. Man erhält 4,7 Teile eines orangen Pulvers, das die gleichen Eigenschaften, wie das Produkt von Beispiel 1 aufweist.

| Metallanalyse: | | |
|---|---|---|
| | Ca | Na |
| Berechnet: | 3,54 % | 4,06 % |
| Gefunden: | 3,94 % | 3,69 % |

Beispiel 3: 6,7 Teile 41%iges Dinatriumsalz der Verbindung der Formel III ($M^{\oplus}$ = $M_1^{\oplus}$ = $Na^{\oplus}$) und 4,4 Teile 44%iges Dicalciumsalz ($M^{\oplus}$ = $M_1^{\oplus}$ = $(Ca/2)^{\oplus}$) werden in 100 Teilen destilliertem Wasser auf 80 °C erhitzt. Die sich verdickende orange Suspension wird 16 Stunden bei dieser Temperatur gerührt, auf Raumtemperatur abgekühlt, zur besseren Filtration mit der Lösung von 0,6 Teilen Natriumchlorid und 0,6 Teilen Calciumchlorid in 10 Teilen destilliertem Wassers versetzt und abgenutscht. Der Rückstand wird mit entionisiertem Wasser gewaschen und im Vakuum bei 60 °C getrocknet. Man erhält 4,6 Teile eines orangen Pulvers, das die gleichen Eigenschaften, wie das Produkt von Beispiel 1 aufweist.

| Metallanalyse: | | |
|---|---|---|
| | Ca | Na |
| Berechnet: | 3,54 % | 4,06 % |
| Gefunden: | 3,20 % | 4,59 % |

In der nachfolgenden Tabelle werden die gemäss der in Beispiel 1 beschriebenen Methode für dieses Produkt bestimmten d-Werte aufgeführt.

| d-Wert in Å | Intensität |
|---|---|
| 10,5 | sehr stark |
| 9,9 | sehr schwach |
| 9,4 | sehr schwach |
| 8,9 | mittel |
| 8,2 | stark |
| 7,9 | mittel |
| 5,90 | stark |
| 5,49 | stark |
| 5,20 | mittel |
| 5,04 | stark |
| 4,73 | sehr stark |
| 4,61 | stark |
| 4,46 | sehr schwach |
| 4,39 | sehr schwach |
| 4,26 | sehr stark |
| 4,17 | sehr stark |
| 4,08 | schwach |
| 3,96 | mittel |
| 3,89 | sehr schwach |
| 3,84 | stark |
| 3,67 | mittel |
| 3,49 | sehr stark |
| 3,46 | sehr stark |
| 3,39 | stark |
| 3,34 | schwach |
| 3,31 | schwach |
| 3,21 | schwach |
| 3,08 | stark |
| 3,06 | stark |

Beispiel 4: 5,45 Teile Calciumsalz der Verbindung der Formel III ($M^{\oplus}$ = $M_1^{\oplus}$ = $(Ca/2)^{\oplus}$) werden in 80 Teilen entionisiertem Wasser auf 80 °C erhitzt. Die orange Suspension wird mit der Lösung von 1,2 Teilen NaCl in 20 Teilen Wasser versetzt. Man rührt 16 Stunden bei 80 °C und nutscht heiss ab. Der Rückstand wird mit 100 Teilen Wasser gewaschen und im Vakuum bei 60 °C getrocknet. Die Ausbeute beträgt 5,2 Teile (94,1 % d. Th.) eines orangen Pulvers.

Dieses Produkt entspricht weitgehend dem nach Beispiel 3 erhaltenen Produkt und färbt Polyvinylchlorid und Polyethylen in farbstarken beständigen gelben Tönen. Die für dieses Produkt wie in Beispiel 1 beschrieben bestimmten d-Werte sind in der nachfolgenden Tabelle aufgeführt.

| d-Wert in Å | Intensität |
|---|---|
| 10,5 | sehr stark |
| 9,9 | sehr schwach |
| 8,8 | mittel |
| 8,1 | mittel |
| 7,9 | schwach |
| 5,88 | stark |
| 5,49 | stark |
| 5,19 | schwach |
| 4,86 | mittel |
| 4,72 | sehr stark |
| 4,59 | mittel |
| 4,41 | schwach |
| 4,26 | sehr stark |
| 4,17 | sehr stark |
| 4,08 | schwach |
| 3,95 | schwach |
| 3,88 | sehr schwach |
| 3,84 | stark |
| 3,66 | mittel |
| 3,49 | mittel |
| 3,45 | sehr stark |
| 3,37 | stark |
| 3,32 | mittel |
| 3,07 | stark |
| 3,05 | stark |

Beispiel 5: 15,35 Teile 36%iges Dinatriumsalz der Verbindung der Formel III ($M^{\oplus}$ = $M_1^{\oplus}$ = $Na^{\oplus}$) werden in 80 Teilen entionisiertem Wasser auf 80 °C erhitzt und mit der Lösung von 0,75 Teilen Calciumchlorid in 20 Teilen destilliertem Wasser versetzt. Es findet eine Verdickung statt. Die dicke orange Suspension wird 16 Stunden bei 80 °C gerührt und heiss filtriert. Der Rückstand wird mit entionsiertem Wasser gewaschen und im Vakuum bei 60 °C getrocknet. Die Ausbeute beträgt 5,5 Teile (100 % d. Th.) eines orangen Pulvers mit ähnlichen Eigenschaften, wie das Produkt von Beispiel 1.

| Metallanalyse: | | |
|---|---|---|
| | Ca | Na |
| Berechnet: | 3,54 % | 4,06 % |
| Gefunden: | 3,50 % | 4,42 % |

Beispiel 6 11,5 Teile 47%iges Diammoniumsalz der Verbindung der Formel III ($M^{\oplus}$ = $M_1^{\oplus}$ = $NH_4^{\oplus}$ ), 21 Teile Natriumchlorid und 12 Teile Calciumchlorid werden in 160 Teile entionisiertem Wasser auf 79 °C erhitzt, 16 Stunden bei dieser Temperatur gerührt und wie in Beispiel 5 aufgearbeitet. Man erhält 5,25 Teile (95,2 % d. Th.) eines orangen Pulvers mit ähnlichen Eigenschaften wie das Produkt von Beispiel 1.

| Metallanalyse: | | |
|---|---|---|
| | Ca | Na |
| Berechnet: | 3,54 % | 4,06 % |
| Gefunden: | 3,78 % | 4,20 % |

Beispiel 7: 2,4 Teile 2-Amino-4,5-dichlor-benzolsulfonsäure werden in 50 Teilen entionisiertem Wasser 10 Minuten verrührt und mit 1,145 Teilen 90%igem tert.-Butylnitrit versetzt. Man rührt die beige Suspension eine Stunde bei Raumtemperatur und gibt nacheinander 2,8 Teile 90,1%iges 1-(3-Sulfophenyl)-3-methyl-5-pyrazolon und eine Lösung aus 0,8 Teilen Calciumacetat und 0,8 Teilen Natriumacetat in 50 Teilen

destilliertem Wasser zu. Es entsteht ein oranger Niederschlag. Man rührt die orange Suspension 5 Stunden bei Raumtemperatur, 2 Stunden bei 80 °C und filtriert sie heiss. Der Rückstand wird mit entionisiertem Wasser gewaschen und im Vakuum bei 60 °C getrocknet. Man erhält 5,25 Teile (95 % d. Th.) eines orangen Pulvers welches weitgehend die gleichen Eigenschaften wie das Produkt von Beispiel 1 besitzt.

| Metallanalyse: | | |
|---|---|---|
| | Ca | Na |
| Berechnet: | 3,54 % | 4,06 % |
| Gefunden: | 3,44 % | 3,96 % |

Beispiele 8 und 9: In analoger Weise kann man, ausgehend von den in der nachfolgenden Tabelle aufgeführten Aminen (Kolonne 2), Kupplungskomponenten (Kolonne 3) und Kationen (Kolonne 4), zu weiteren erfindungsgemässen Mischkristallen gelangen.

| Beispiel Nr. | Amin | Kupplungskomponente | Kationen | Farbton in Weich-PVC (0,2 % Pigmentkonzentration) |
|---|---|---|---|---|
| 8 | 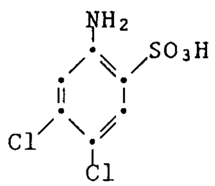 | 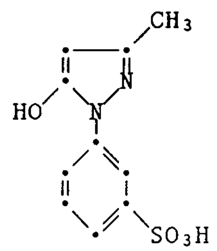 | $Ca^{2\oplus}+NH_4^{\oplus}$ | gelb |
| 9 | 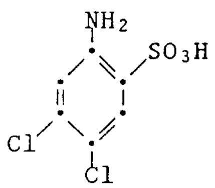 | 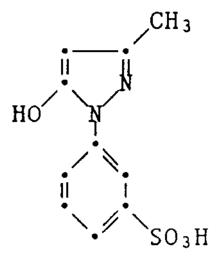 | $Ca^{2\oplus}+K^{\oplus}$ | gelb |

Beispiel 10: 12,1 Teile 2-Amino-4,5-dichlorbenzolsulfonsäure werden in 90 Teilen entionisiertem Wasser und 5,1 Volumenteilen 30%iger Natriumhydroxidlösung gelöst. Die klare rotstichig-violette Lösung wird mit 8,9 Volumenteilen 37%iger Salzsäure versetzt. Die entstehende weisse, dicke Suspension wird auf 5 °C abgekühlt und innerhalb von 10 Minuten mit 12,5 Volumenteilen 4N-Natriumnitritlösung versetzt. Zur erhaltenen leicht beigen Suspension tropft man innerhalb von 5 Minuten die Lösung aus 14,4 Teilen 1-(3-Sulfophenyl)-3-methyl-5-pyrazolon, 100 Teilen destilliertem Wasser und 10,1 Volumenteilen 30%iger Natriumhydroxidlösung zu. Die erhaltene orange Suspension, deren pH-Wert 6 beträgt, wird während 2 Stunden gerührt. Die Temperatur der Suspension steigt dabei von 5° auf 22 °C. Danach erwärmt man diese Suspension auf 80 °C, gibt 11,3 Teile Calciumchlorid zu, rührt 16 Stunden bei 80 °C und filtriert heiss. Der erhaltene Rückstand wird mit 100 Volumenteilen entionisiertem Wasser gewaschen und im Vakuum bei 60 °C getrocknet. Man erhält 27,1 Teile (99 % d. Th.) eines Produktes, welches strukturell und qualitativ praktisch gleich wie die Produkte der Beispiele 1 bis 7 ist.

| Metallanalyse: | | |
|---|---|---|
| | Ca | Na |
| Berechnet: | 3,54 % | 4,06 % |
| Gefunden: | 3,87 % | 3,95 % |

Beispiel 11: 2,6 Teile 2-Amino-4,5-dichlor-benzolsulfonsäure-Calciumsalz und 2,7 Teile 1-(3-Sulfophenyl)-3-methyl-5-pyrazolon-Natriumsalz werden in der Mischung aus 55 Volumenteilen Dimethylformamid, 55 Teilen destilliertem Wasser und 55 Volumenteilen Essigsäure bei 30 °C gelöst. Die orange Lösung wird bei 26 °C in 10 Minuten tropfenweise mit 2,55 Volumenteilen 4N-Natriumnitritlösung versetzt. Es fällt ein oranger Niederschlag aus. Die Temperatur steigt auf 29 °C. Nach 5 Stunden Rühren sinkt die Temperatur auf 23 °C. Der Rückstand wird gut abgepresst, mit 100 Teilen entionisiertem Wasser gewaschen und im Vakuum bei 60 °C getrocknet. Man erhält 4,3 Teile eines orangen Pulvers.

| Metallanalyse: | | |
|---|---|---|
| | Ca | Na |
| Berechnet: | 1,77 % | 6,09 % |
| Gefunden: | 1,60 % | 6,42 % |

Beispiel 12: 0,6 g des gemäss Beispiel 1 erhaltenen Produktes werden mit 67 g Polyvinylchlorid, 33 g Dioctylphthalat, 2 g Dibutylzinndilaurat und 2 g Titandioxid zusammengemischt und auf dem Walzenstuhl während 15 Minuten bei 160 °C zu einer dünnen Folie verarbeitet. Die so erzeugte gelbe PVC-Folie ist farbstark, migrations- und lichtbeständig.

Beispiel 13: Eine Mischung bestehend aus 1,0 g des nach Beispiel 1 erhaltenen Produktes, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert. Das so erhaltene Granulat wird auf der Spritzgussmaschine (Allround Aarburg 200) bei 220 °C zu Platten verspritzt und 5 Minuten bei 180 °C nachgepresst. Die Pressplatte weisen farbstarke gelbe Nuancen mit ausgezeichneten Beständigkeiten auf.

**Patentansprüche**

1. Mischkristalle aus mindestens zwei voneinander verschiedenen Verbindungen der Formel I

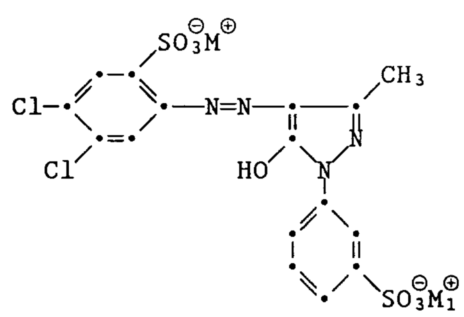

(I),

worin $M^{\oplus}$ und $M_1^{\oplus}$ unabhängig voneinander $Na^{\oplus}$, $K^{\oplus}$, $NH_4^{\oplus}$ oder $(Ca/2)^{\oplus}$ bedeuten, dadurch gekennzeichnet, dass in den die Mischkristalle bildenden Verbindungen der Formel I mindestens zwei der Kationen $M^{\oplus}$ und $M_1^{\oplus}$ voneinander verschieden sind und dass sich die Röntgenbeugungsdiagramme der Mischkristalle von den Röntgenbeugungsdiagrammen der Einzelkomponenten und von deren Summe unterscheiden.

2. Mischkristalle gemäss Anspruch 1, worin $M^{\oplus}$ und $M_1^{\oplus}$ unabhängig voneinander $Na^{\oplus}$ oder $(Ca/2)^{\oplus}$ bedeuten.

3. Hochmolekulares organisches Material enthaltend Mischkristalle gemäss Anspruch 1.

## Claims

**1.** Mixed crystals of at least two different compounds of formula I

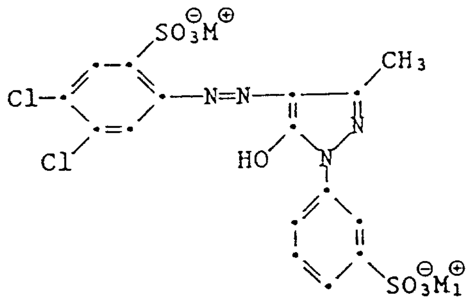

(I)

in which $M^{\oplus}$ and $M_1^{\oplus}$ are each independently of the other $Na^{\oplus}$, $K^{\oplus}$, $NH_4^{\oplus}$ or $(Ca/2)^{\oplus}$, wherein at least two of the cations $M^{\oplus}$ and $M_1^{\oplus}$ in the compounds of formula I forming the mixed crystals are different and the X-ray diffraction patterns of the mixed crystals differ from the X-ray diffraction patterns of the individual components and from their sum.

**2.** Mixed crystals according to claim 1, wherein $M^{\oplus}$ and $M_1^{\oplus}$ are each independently of the other $Na^{\oplus}$ or $(Ca/2)^{\oplus}$.

**3.** High molecular weight organic material containing mixed crystals according to claim 1.

## Revendications

**1.** Cristaux mixtes d'au moins deux composés différents l'un de l'autre répondant chacun à la formule I

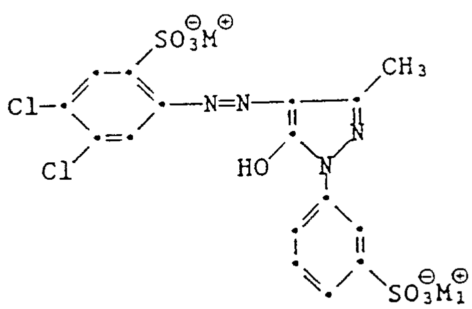

(I),

formule dans lesquelles $M^{\oplus}$ et $M_1^{\oplus}$ représentent chacun, indépendamment l'un de l'autre, $Na^{\oplus}$, $K^{\oplus}$ , $NH_4^{\oplus}$ ou $(Ca/2)^{\oplus}$, cristaux caractérisés en ce que, dans les composés de formule I formant les cristaux mixtes, au moins deux des cations $M^{\oplus}$ et $M_1^{\oplus}$ sont différents l'un de l'autre et en ce que des diagrammes de diffraction de rayons X par les cristaux mixtes diffèrent des diagrammes de diffraction des rayons X par les constituants individuels et diffèrent de leur somme.

**2.** Cristaux mixtes selon la revendication 1, dans lesquels $M^{\oplus}$ et $M_1^{\oplus}$ représentent chacun, indépendamment l'un de l'autre $Na^{\oplus}$ ou $(Ca/2)^{\oplus}$.

**3.** Matière organique à poids moléculaire élevé, contenant des cristaux mixtes selon la revendication 1.